# FASCICULE DE BREVET EUROPEEN

(11) **EP 0 741 261 B1**
(45) Date de publication et mention de la délivrance du brevet: **17.05.2000**
(21) Numéro de dépôt: 96420135.4
(22) Date de dépôt: 18.04.1996
(51) Int. Cl.: F16L 15/06

(54) **Assemblage fileté pour tubes**
Schraubverbindung für Rohre
Screw connection for pipes

(30) Priorité: 28.04.1995 FR 9505371
(43) Date de publication de la demande: 06.11.1996
(73) Titulaire: VALLOUREC MANNESMANN OIL & GAS FRANCE, 59620 Aulnoye-Aymeries (FR); SUMITOMO METAL INDUSTRIES, LTD., Osaka-shi, Osaka 541-0046 (JP)
(72) Inventeur: Noel, Thierry, 59990 Sebourg (FR); Narita, Akira, Osaka 599-03 (JP)
(74) Mandataire: Desolneux, Jean-Paul Charles

(56) Documents cités:
- EP-A- 0 027 771
- EP-A- 0 454 147
- EP-A- 0 488 912
- DE-A- 3 805 512
- FR-A- 1 489 013
- GB-A- 2 146 085
- GB-A- 2 156 933

## Description

L'assemblage fileté pour tubes suivant l'invention concerne les tubes utilisés pour la recherche et l'exploitation des gisements de pétrole pour l'utilisation de l'énergie géothermique et pour toutes les applications dans lesquelles on doit assembler bout à bout des tubes métalliques.

Bien que l'assemblage fileté suivant l'invention soit utilisable pour l'ensemble de ces applications et plus particulièrement pour la réalisation de tubes d'exploitation (tubing) ou de tubes de cuvelage (casing) dans le domaine pétrolier, il convient plus spécialement pour les tubes de relativement fort diamètre, tels que ceux utilisés pour la réalisation de casing.

Différents types d'assemblages filetés pour tubes métalliques permettent d'obtenir à la fois une bonne tenue mécanique et une bonne étanchéité.

C'est ainsi qu'on utilise le plus souvent des manchons d'assemblage comportant à chaque extrémité un logement muni d'un filetage tronconique femelle, dans lequel vient s'engager l'extrémité d'un tube muni d'un filetage tronconique mâle correspondant.

Ces filetages ne permettent pas à eux seuls, en règle générale, d'assurer une étanchéité suffisante de l'assemblage, car le pétrole ou le gaz sous pression circulent le long des filets du fait des jeux existants. L'utilisation de graisses chargées en particules solides, telles que du graphite, retarde ces fuites mais ne les supprime pas. Aussi, on munit le plus souvent ces assemblages de zones annulaires d'étanchéité qui permettent, grâce à un serrage, accompagné d'une déformation élastique suffisante, de réaliser un contact étanche métal/métal.

C'est ainsi qu'on connaît les joints étanches du type décrit dans le brevet français 1489013. Ce joint fileté comporte une zone de butée, formée en extrémité de l'élément mâle de l'assemblage par une surface tronconique concave qui vient en appui contre une surface femelle correspondante tronconique convexe. Une zone de portée tronconique convexe adjacente à la butée mâle vient simultanément en appui contre une surface femelle tronconique concave et assure l'étanchéité métal/métal. La demande de brevet européen EP-A-0 488 912 décrit un perfectionnement de ce type de joint.

Ce type de joints étanches est très efficace mais nécessite une forte épaisseur du composant femelle par suite de l'existence d'un talon dans lequel on réalise ces zones de portée et butée.

Pour éviter cet inconvénient, le brevet européen 0027771 décrit un assemblage fileté de tubes par manchon, dans lequel les extrémités mâles de ces tubes comportent des bords frontaux qui viennent en butée l'un contre l'autre, en fin de vissage, à l'intérieur du manchon. Selon ce brevet, les bords frontaux ont un profil spécial, par exemple tronconique concave, pour favoriser un gonflement du diamètre de ces bords frontaux qui viennent en appui contre la paroi intérieure du manchon, créant ainsi une étanchéité métal-métal à ce niveau.

On peut ainsi réduire l'épaisseur du manchon, mais les surfaces de butée des bords frontaux se déforment plastiquement, au cours des multiples vissages-dévissages, avec perte d'étanchéité progressive, non seulement au niveau de ces surfaces de butée, mais aussi à celui du contact entre le bord extérieur de ces surfaces et la paroi intérieure du manchon. De plus suivant le degré de vissage des extrémités mâles dans le manchon, la tenue mécanique de tels assemblages peut varier dans un large intervalle et il en résulte des conditions de travail peu reproductibles et peu fiables pour la zone dans laquelle les bords frontaux des tubes viennent en butée l'un contre l'autre.

La demande de brevet GB 2 146 085 reprend une structure du même type que le document EP 0 027 771 avec une configuration particulière des bords frontaux des éléments mâles pour créer en fin de vissage deux zones de contact métal-métal, une au niveau de ces bords frontaux, l'autre entre la circonférence de la surface extérieure des zones d'extrémité mâles et la surface intérieure d'un passage annulaire axial du manchon.

Le document GB 2 146 085 prévoit en outre, pour résoudre le problème des conditions de travail peu reproductibles, des épaulements d'arrêt sur les éléments mâles et sur les logements femelles du manchon.

Cependant un tel assemblage, s'il est relativement économe en matière, reste coûteux à produire et le problème de déformation plastique des bords frontaux après plusieurs vissages-dévissages existe entier comme signalé déjà pour le EP 0027771 avec des conséquences prévisibles de perte d'étanchéité suite à ces multiples vissages-dévissages.

On a recherché la possibilité d'obtenir dans la pratique un degré d'étanchéité suffisant en perfectionnant et modifiant considérablement la conception d'un tel assemblage. On a cherché aussi à rendre fiables et constantes les caractéristiques du joint malgré des vissages-dévissages successifs auxquels il est soumis. On a recherché en particulier, en combinant l'effet des différentes composantes de l'assemblage, la possibilité de faire jouer au filetage tronconique, en plus de son rôle de moyen de liaison mécanique, un véritable rôle d'étanchéité. On a cherché ainsi à contrôler de façon reproductible et précise la position géométrique des différents composants mâles par rapport aux composants femelles de l'assemblage. On a cherché à réaliser des filetages ayant une résistance accrue à la traction axiale, en même temps qu'une résistance très élevée à la pression interne, afin d'éviter les risques d'arrachement des filets, le profil de ces filets étant aussi conçu pour obtenir une très bonne étanchéité, tout en permettant des vissages-dévissages répétés avec un faible risque de grippage.

On a recherché aussi, en particulier, la possibilité de déterminer avec précision le degré de vissage à réaliser en usine afin d'assurer de façon reproductible un serrage suffisant d'un premier élément mâle dans un logement femelle d'un manchon et de permettre un vissage ultérieur du deuxième élément mâle par exemple sur chantier dans le deuxième logement du même manchon avec un degré de serrage adapté, pour obtenir une étanchéité satisfaisante.

On a cherché enfin une conception qui conduise à un assemblage économique et facile à mettre en oeuvre sur chantier et en usine.

L'assemblage fileté pour tubes métalliques qui fait l'objet de l'invention permet d'atteindre ces résultats recherchés.

Cet assemblage comporte un manchon muni de deux logements femelles munis chacun d'un filetage tronconique intérieur, logements disposés suivant un même axe, de mêmes dimensions et dans chacun desquels est vissé un élément mâle d'un tube muni d'un filetage tronconique extérieur correspondant au filetage du logement femelle, élément mâle qui comporte au-delà de l'extrémité de petit diamètre de son filetage une zone non filetée d'extrémité se terminant par une paroi frontale, les parois frontales des deux éléments mâles venant, en fin de vissage, en butée l'une contre l'autre.

Les dimensions des éléments mâles et des logements femelles sont déterminées pour que, en fin de serrage, les parois frontales des zones d'extrémité des éléments mâles viennent en butée selon un plan perpendiculaire à l'axe du manchon, ce plan se trouvant toujours dans une position axiale déterminée avec précision, préférentiellement située au voisinage immédiat du milieu du manchon.

Suivant l'invention, la section du passage axial, réalisé dans le manchon entre les deux logements femelles filetés, est déterminée de façon qu'il existe sur toute la longueur du passage un jeu suffisant entre les parois extérieures des deux zones d'extrémité non filetées des deux éléments mâles et la paroi intérieure en regard de ce passage du manchon pour permettre la réalisation de l'assemblage.

A l'état monté, aucune étanchéité métal-métal n'est assurée dans l'assemblage entre les parois extérieures des deux zones d'extrémité non filetées des deux éléments mâles et la paroi intérieure en regard du passage axial du manchon. Cependant il peut exister, bien que ceci ne soit pas recherché, un contact non continu et non étanche entre certaines zones du passage axial du manchon et les zones en regard des parois extérieures des zones d'extrémités non filetées.

Ces parois extérieures et la paroi intérieure peuvent avoir différentes formes géométriques qui sont conditionnées par la possibilité d'assurer les jeux décrits plus haut. Ces formes peuvent par exemple être coniques selon l'axe commun.

De façon particulièrement avantageuse, la section du passage axial est cylindrique de même que la paroi extérieure des deux zones d'extrémité non filetée des deux éléments mâles, l'axe commun étant l'axe de l'assemblage.

Afin de réaliser un serrage suffisant, contrôlé, précis, mais non excessif de chacun des éléments mâles dans son logement femelle, l'assemblage comporte des épaulements d'arrêts. On munit ainsi au moins un des deux logements femelles d'un épaulement d'arrêt dont la surface d'appui est apte à venir en butée contre la surface d'appui d'un épaulement correspondant réalisé sur l'élément mâle qui lui est associé.

Lorsque seul un logement femelle comporte un épaulement, c'est d'abord du côté de ce logement femelle que devra être vissé et serré l'élément mâle qui lui correspond lors de la réalisation de l'assemblage.

Pour éviter de particulariser les éléments mâles en distinguant entre ceux munis d'un épaulement et ceux non munis d'un épaulement, on donnera au manchon dont seul un logement femelle est équipé d'un épaulement, une forme telle que le logement femelle non équipé d'un épaulement puisse accepter à l'état vissé et serré tout élément mâle qui lui correspond que celui-ci soit muni ou non d'un épaulement d'arrêt.

De façon préférentielle, on munit chacun des deux logements femelles d'un épaulement d'arrêt dont la surface d'appui est apte à venir en butée contre la surface d'appui d'un épaulement correspondant réalisé sur chacun des deux éléments mâles.

Les deux surfaces d'appui des deux épaulements mâles sont chacune à égale distance de la paroi frontale de la zone d'extrémité correspondante et les deux surfaces d'appui des deux épaulements femelles sont à égale distance du plan médian du passage axial, qui correspond en général au plan médian du manchon, l'écartement des surfaces d'appui des épaulements mâles entre elles, lorsque les parois frontales des zones d'extrémité mâles sont en butée, étant légèrement supérieur à l'écartement des surfaces d'appui des épaulements femelles. Cette faible différence d'écartement est déterminée, toujours suivant l'invention, de façon que, après vissage et serrage des deux éléments mâles avec mise en butée de leurs parois frontales, au moins l'une des deux paires d'épaulements mâle/femelle conserve un léger jeu entre ses deux surfaces d'appui en regard l'une de l'autre.

Ce léger jeu est prédéterminé pour que, compte tenu de la géométrie des filets mâles et femelles expliquée ci-après, le serrage de l'élément mâle correspondant dans son logement femelle atteigne le degré voulu pour obtenir une étanchéité et une cohésion mécanique satisfaisante, les parois frontales en butée des éléments mâles étant positionnées comme expliqué précédemment.

Les épaulements d'arrêt peuvent être situés à différents emplacements par rapport au filetage.

Les dimensions des éléments mâles et des logements femelles ainsi que la position respective des épaulements d'arrêt sur le manchon et sur le ou les éléments mâles sont déterminées pour que à l'état vissé-serré, il existe une interférence précise et parfaitement contrôlée entre les filetages correspondants, ceci se traduisant par des pressions de contact entre sommets et fonds de dents du fait de la géométrie du filetage expliquée ci-après.

On donne selon l'invention aux dents des filets mâles, sur une longueur axiale représentant une partie de la longueur totale de la zone filetée, longueur incluant les filets évanouissants, une hauteur constante identique à la hauteur des dents des filets femelles.

Préférentiellement, la partie de la longueur totale de la zone filetée sur laquelle les dents des filets mâles ont une hauteur constante identique à la hauteur des dents des filets femelles, est au moins égale à un quart de la longueur totale de la zone filetée.

De façon particulièrement avantageuse, les hauteurs de dents mâles et femelles sont identiques sur la totalité de la longueur de la zone filetée dans laquelle les dents ont leur pleine hauteur.

De la sorte et choisissant pour la hauteur des dents mâles et femelles une même valeur nominale et les mêmes tolérances, on maximalise les surfaces de contact avec pression métal-métal entre sommets de dents et fonds de dents des filets opposés, les jeux entre sommets de dents et fonds de dents étant de l'ordre de 0,05 mm.

De la sorte la combinaison des caractéristiques du profil du filetage et des épaulements d'arrêt permet d'obtenir des deux côtés du manchon des pressions de contact suffisantes et contrôlées pour assurer l'étanchéité tout en évitant les déformations non contrôlées du manchon.

De plus on limite le jeu selon l'axe entre les dents du filetage c'est-à-dire le jeu entre flancs des filets mâles et femelles à un minimum nécessaire pour éviter les phénomènes de grippage et éviter le coincement.

De préférence, à l'état vissé, serré, on détermine le profil de ces dents de filets mâles et femelles de façon que les flancs actifs (flancs loading) mâle/femelle soient en contact, avec pression métal-métal, entre eux, tandis que sur les flancs d'engagement (flancs stabbing), il existe un jeu de l'ordre de 0,03 à 0,09 mm.

De préférence également, on détermine la différence d'écartement entre les surfaces d'appui des épaulements mâles d'une part et les surfaces d'appui des épaulements femelles d'autre part, pour que, après vissage et serrage des éléments mâles dans leurs logements femelles, avec mise en butée des parois frontales, le jeu total, entre les surfaces d'appui des deux paires d'épaulements mâle/femelle, soit préférentiellement inférieur à 1 mm avec une moyenne de 0,4 mm.

L'invention concerne aussi le procédé consistant à réaliser l'assemblage fileté en deux étapes. Selon ce procédé on effectue par exemple en usine un assemblage préalable de l'élément mâle d'un premier tube avec un manchon, en vissant cet élément mâle jusqu'à réalisation d'un serrage tel que la surface d'appui de son épaulement mâle vienne en butée avec la surface d'appui de l'épaulement femelle correspondant. A cet instant, dans le cas courant, la paroi frontale de la zone d'extrémité non filetée dépasse le plan médian de quelques dixièmes de millimètre.

Lors du montage par exemple sur chantier du deuxième élément mâle, le vissage sera effectué jusqu'à mise en butée des deux parois frontales l'une contre l'autre avec un certain degré de serrage.

Le serrage du deuxième élément mâle dans son logement est fait de préférence avec un couple suffisant pour provoquer un faible recul de la première paroi frontale, les surfaces d'appui des épaulements correspondant au premier élément mâle restant ou non en contact sans de préférence que le recul de la première paroi frontale franchisse le plan médian, et sans de préférence aller jusqu'à mettre en contact les surfaces d'appui des épaulements correspondants du deuxième élément mâle dans le cas où de tels épaulements existent.

De préférence, les parois frontales des deux zones d'extrémité non filetés ont une surface annulaire en majeure partie plane qui se trouve dans un plan perpendiculaire à l'axe du manchon.

De préférence, afin d'obtenir une excellente résistance à la traction axiale et à l'arrachement des filets mâles de leur logement femelle on donne aux dents du filet mâle et femelle un angle négatif sur leur flanc actif (flanc loading). Cet angle est avantageusement compris entre 3 et 15° par rapport à un plan perpendiculaire à l'axe du filetage.

Sur le flanc d'engagement (flanc stabbing) des dents du filet mâle on donne de préférence un angle plus fort en valeur absolue pour faciliter l'introduction et le dégagement des outils. Cet angle est par exemple d'environ 10 à 45° par rapport à un plan perpendiculaire à l'axe du filetage. De préférence également, pour faciliter l'introduction de l'élément mâle dans le logement femelle sans endommager le filetage par accrochage, on donne au flanc d'engagement, dans sa partie de grand diamètre qui rejoint le sommet de dent du filet mâle un angle qui est avantageusement compris entre 30 et 70° par rapport à un plan perpendiculaire à l'axe du filetage.

De préférence, en particulier afin de mieux contrôler les dimensions des filetages après usinage, on donne, dans la zone filetée dans laquelle les dents ont leur pleine hauteur, aux sommets et aux fonds des dents de filets mâle et femelle une pente parallèle à celle du filetage. Cette pente est par exemple d'environ 2,5 à 8 % par rapport à l'axe de l'assemblage.

De préférence, les épaulements d'arrêt mâles sont situés entre l'extrémité de la zone filetée de petit diamètre et le début de la zone d'extrémité non filetée qui s'engage dans le passage annulaire du manchon entre les deux logements femelles. Les épaulements d'arrêt femelles se trouvent alors de part et d'autre de ce ce passage annulaire.

On utilise, pour les applications les plus courantes de ces assemblages, des composants en acier au carbone non allié ou allié suivant les conditions d'utilisation.

Pour des conditions d'utilisation particulières, on fait appel à des aciers inoxydables ou réfractaires ou encore à d'autres métaux ou alliages.

Afin de réduire les risques de grippage au cours du vissage-dévissage de l'assemblage suivant l'invention, on utilise un lubrifiant adapté tel qu'une huile ou graisse de viscosité convenable. Avantageusement, on peut utiliser un traitement de surface qui abaisse le coefficient de frottement et évite le grippage. Ce traitement peut être limité aux manchons et peut être par exemple dans le cas de composants en acier non allié ou faiblement allié une phosphatation au phosphate de Zn ou de Mn. Ce traitement permet ensuite de faire appel à une huile pour assurer le montage de l'assemblage fileté. On peut aussi substituer à la phosphatation, le dépôt d'une mince couche d'un métal convenable tel que Cu, Cr, Ni, Sn, Pb ou autres, par exemple par électrolyse. On utilisera des huiles ou graisses compatibles avec les jeux très faibles entre filets mâles et femelles.

Les figures et les exemples ci-après décrivent, de façon non limitative, un mode de réalisation de l'assemblage et du procédé suivant l'invention.

La figure 1 est une vue schématique en coupe d'un assemblage par manchon suivant l'invention seule la section au-dessus de l'axe de symétrie étant représentée.

La figure 2 est une vue agrandie de la zone médiane de la figure 1 montrant les conditions de serrage en butée des deux éléments mâles l'un contre l'autre.

La figure 3 est une vue agrandie à l'état assemblé des filetages tronconiques mâles et femelles suivant l'invention.

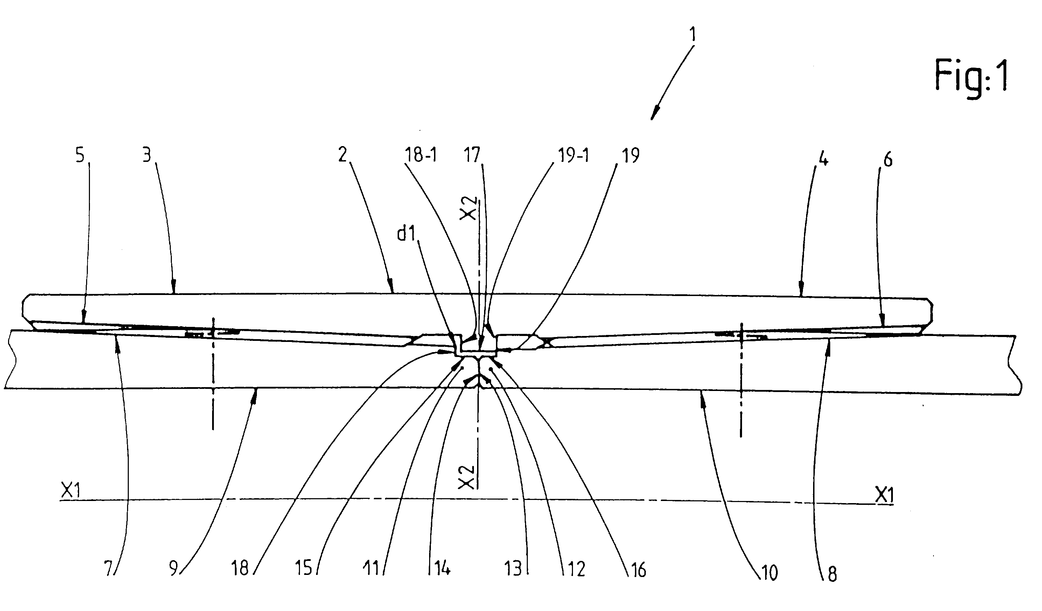

La figure 1 est une vue schématique d'ensemble, en coupe, d'un assemblage fileté 1 comportant un manchon 2 en acier muni de deux logements femelles 3 et 4 d'axe X1-X1. Ces logements sont munis de filetages tronconiques intérieurs 5, 6 dans lesquels sont engagés les filetages extérieurs tronconiques 7, 8 des éléments mâles 9, 10 de deux tubes en acier qu'il s'agit d'assembler.

Chaque élément mâle 9,10 comporte, au-delà de l'extrémité de petit diamètre 32 de la partie filetée, une zone d'extrémité non filetée 11, 12 munie d'une paroi frontale 13, 14. Ces parois frontales de mêmes dimensions comportent chacune une surface annulaire de butée en majeure partie plane située dans un plan perpendiculaire à l'axe X1-X1 du manchon. La longueur de chaque zone d'extrémité 11, 12 est déterminée de façon que les parois frontales 13, 14 soient aptes à venir en butée l'une contre l'autre, avec un certain degré d'étanchéité, quand chaque élément 9, 10 mâle est suffisamment serré par vissage dans son logement. Le plan de butée de ces parois frontales est alors au voisinage du plan médian de trace X2-X2 du manchon 2. La surface extérieure 15, 16 de la zone d'extrémité non filetée 11, 12 est cylindrique et a un diamètre inférieur à celui de la surface intérieure 17 également cylindrique du passage annulaire axial du manchon 2. Le jeu, entre ces deux surfaces annulaires en regard, est suffisant pour que la déformation élastique résultant du serrage des éléments mâles 9, 10 dans leurs logements 3, 4 et du serrage correspondant des parois frontales 13, 14, en butée l'une contre l'autre, ne puisse mettre en contact d'appui continu et étanche sur toute la périphérie ces surfaces extérieures 15 et 16 avec la surface intérieure 17.

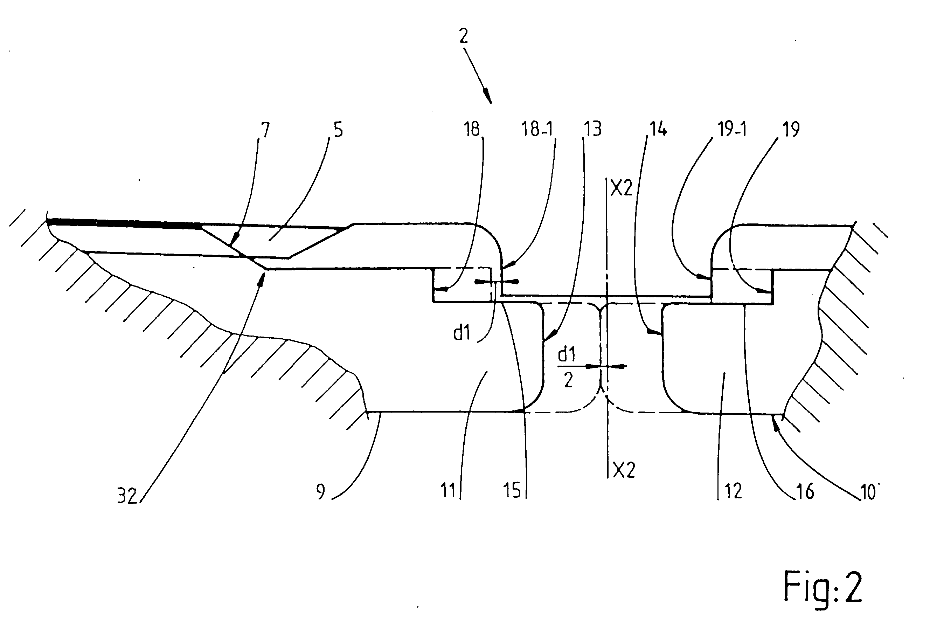

Afin de contrôler la position de vissage et d'éviter un serrage excessif par survissage de chaque élément mâle 9, 10 dans le logement femelle 3, 4 correspondant, on utilise deux paires d'épaulements d'arrêt mâle/femelle 18, 18-1 et 19, 19-1 pour contrôler le serrage. Les deux surfaces d'appui 18, 19 des épaulements d'arrêt mâles sont à égale distance de la paroi frontale 13, 14 de la zone d'extrémité 11, 12 correspondante et les deux surfaces d'appui 18-1, 19-1 des épaulements d'arrêt femelles sont à égale distance du plan médian X2-X2 du manchon. De plus l'écartement des surfaces d'appui 18-1, 19,1 des deux épaulements d'arrêt femelles est plus faible que l'écartement des surfaces d'appui des deux épaulements mâles quand les surfaces frontales 13, 14 des zones d'extrémité 11, 12 sont en butée. On détermine cette différence d'écartement de façon que, même lorsque les deux éléments mâles 9,10 sont fortement serrés dans leurs logements 3, 4 par vissage, les surfaces frontales 13, 14 étant serrées en butée l'une contre l'autre, il reste un léger jeu "d1", au niveau d'au moins une paire de surfaces d'appui telles que 18, 18-1 comme le montrent les figures 1 et 2. On remarque que ce jeu "d1" est aux déformations élastiques près, le double de la distance qui sépare le plan de la surface frontale de l'élément mâle correspondant constituant le plan de butée, d'avec le plan médian du manchon. Dans le cas d'un assemblage de tubes, de par exemple 14 inch (355,6 mm) de diamètre extérieur, le jeu total "d1" peut être dans le cas habituel d'environ 0,15 à 0,4 mm.

Pour réaliser l'assemblage fileté selon l'invention, comme le montre la figure 2 de façon schématique, on peut assembler d'abord l'élément mâle 10 avec le manchon 2, dans son logement 4, par exemple en usine, jusqu'à venue en butée des surfaces d'appui 19, 19-1 de la paire d'épaulements d'arrêt correspondante. A ce moment la paroi frontale 14 de la zone d'extrémité 12 dépasse le plan médian X2-X2, avec un écart égal approximativement à la moitié du jeu total "dl". Cette position de la zone d'extrémité 12 et de sa paroi frontale 14 est indiquée en tirets. On effectue par la suite l'assemblage, par exemple sur chantier, soit lors du premier montage, soit lors d'une réparation d'une colonne de tubes, de l'autre élément mâle 9 par vissage dans son logement 3 jusqu'à venue en butée de sa paroi frontale 13 contre la paroi frontale 14. A ce moment là, on constate qu'il y a un jeu égal à "d1" entre les surfaces d'appui 18, 18-1 des épaulements d'arrêt mâle et femelle correspondants. Dans la pratique il est nécessaire de réaliser un serrage suffisant des surfaces frontales en butée. Ce serrage peut entraîner un décollement des surfaces d'appui 19, 19-1 et éventuellement en cas de surserrage une mise en butée des surfaces 18, 18-1. Dans la pratique l'accroissement du couple de serrage au-delà de la mise en butée des parois frontales est rapide et permet donc un contrôle par mesure du couple et/ou par mesure du déplacement angulaire, du degré de serrage nécessaire pour atteindre le serrage voulu en butée des parois frontales 13, 14 l'une contre l'autre. Cette disposition des épaulements d'arrêt, en combinaison avec le profil des filetages mâle et femelle tel qu'il ressort des explications ci-après permet de contrôler les pressions de contact au niveau voulu dans le filetage et ainsi d'obtenir au niveau du filetage le degré d'étanchéité recherché.

On remarque qu'en cas de survissage de l'élément mâle 9, celui-ci ne peut avancer au delà de la mise en butée des surfaces d'appui 18, 18-1 des épaulements d'arrêt, ceci entraînant un recul correspondant du plan de butée entre les parois frontales 13, 14, cette mise en butée des surfaces d'appui 18, 18-1 constituant une sécurité supplémentaire au bon vissage de l'assemblage fileté.

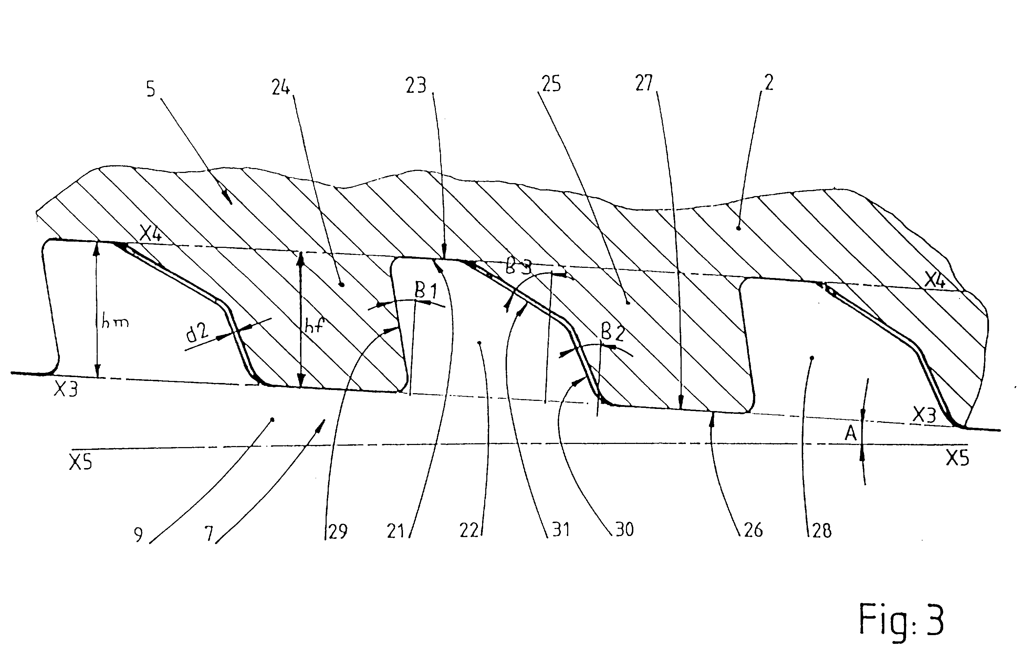

La figure 3 est une vue agrandie à l'état assemblé de filetages tronconiques qui permettent suivant l'invention, de combiner la tenue mécanique et l'étanchéité.

Sur au moins le quart de la longueur totale de la zone filetée, longueur incluant les filets évanouissants et avantageusement sur la totalité de la longueur de la zone filetée dans laquelle les dents ont leur pleine hauteur, la hauteur h m des dents du filet mâle est choisie identique à la hauteur h f des dents du filet femelle, les tolérances étant les mêmes pour h m et h f, de l'ordre de préférence de ± 0,025 mm.

Les hauteurs hm et h f sont mesurées selon une perpendiculaire à l'axe X1-X1 de l'assemblage, seul l'axe X5-X5 parallèle à l'axe X1-X1 étant représenté sur la figure 3.

Il en résulte que, aux jeux dus aux tolérances près, soit au jeu maximum de 0,05 mm les sommets tels que 21 des dents des filets mâles tels que 22 appartenant au filetage 7 de l'élément mâle 9 des figures 1 et 2, sont en contact à l'état serré avec les fonds de filets femelles tels que 23 situés entre les dents des filets femelles 24 et 25 appartenant au filetage 5 du manchon 2.

De même les sommets tels que 27 des dents des filets femelles tels que 25 sont en contact avec les fonds de filets mâles tels que 26 situés entre les dents des filets mâles 22 et 28 appartenant au filetage 7.

Les tangentes X3-X3 et X4-X4 aux fonds et aux sommets de filets mâles et femelles sont parallèles entre elles et inclinées par rapport à une parallèle X5-X5 à l'axe X1-X1 du filetage, d'un angle "A". Cet angle qui peut varier dans d'assez larges limites en fonction du diamètre des tubes et du pas du filetage est par exemple compris entre environ 1,79° et 3,58°.

La géométrie, les dimensions et l'usinage des filetages 5-6 du manchon 2 et des filetages 7-8 des éléments mâles 9-10 sont déterminées pour, compte tenu de la conicité générale, assurer une interférence entre élément mâle 9-10 et logement femelle 3-4 à l'état vissé-assemblé. Cette interférence est parfaitement contrôlée et constante du fait de la présence des épaulements d'arrêt. De la sorte, on obtient, tel que représenté sur la figure 3 un assemblage mécaniquement très monolithique, renforcé, comme on le verra ci-dessous par le fait que le flanc actif tel que 29 a une pente négative.

Comme le montre la figure 3, l'angle du flanc actif (flanc loading) 29, de chaque dent de filet mâle telle que 22 et de filet femelle telle que 24, est négatif, c'est-à-dire que ce flanc est incliné vers l'extérieur par rapport au plan perpendiculaire à l'axe X1-X1 du filetage adjacent à la base de ce flanc actif. Dans le cas du présent exemple cet angle "B1" est de -10° et peut être choisi de préférence dans l'intervalle d'environ - 3 à -15°. On remarque que, dans le cas d'un filet mâle tel que 22, serré dans son logement femelle 23, il n'y a pas de jeu entre le flanc actif tel que 29 et le flanc de la dent du filet femelle 24 contre lequel il vient en appui.

Le flanc d'engagement (flanc stabbing) de la dent du filet mâle tel que 22 est incliné dans sa partie inférieure 30 vers l'intérieur d'un angle "B2" d'environ 20° par rapport à un plan perpendiculaire à l'axe X1-X1 adjacent à la base de ce flanc d'engagement 30.

Cet angle "B2" peut varier par exemple dans l'intervalle d'environ 10 à 45°. De préférence, il est supérieur en valeur absolue à l'angle du flanc actif afin de faciliter l'usinage et le montage de l'assemblage. Ce flanc d'engagement comporte optionnellement et avantageusement dans sa partie supérieure une découpe 31 inclinée d'un angle "B3" qui, dans le cas de la figure 3 est d'environ 55° par rapport à un plan qui l'intersecte perpendiculaire à X1-X1. Cet angle B3 peut varier par exemple entre environ 30 et 70°. Cette découpe, comme expliqué dans la description générale, permet de réduire les risques d'accrochage entre filets mâles et femelles, en cas de centrage incorrect, au cours de l'introduction de l'élément mâle dans son logement et au début du vissage.

Comme le montre la figure 3, un faible jeu "d2" est conservé entre le flanc d'engagement et le flanc en regard du filet femelle pour que, au moment du serrage, l'interférence ait bien lieu entre les sommets des dents des filets mâles et femelles et leurs logements respectifs, entraînant une faible déformation élastique qui assure un serrage efficace.

Ce jeu "d2" doit en tout état de cause rester suffisamment faible pour ne pas être cause de fuite ou de non-étanchéité le long des filets suivant un parcours hélicoïdal.

Un moyen de réduire ou d'obturer ce chemin de fuite est d'utiliser un lubrifiant, huile ou graisse pouvant contenir une teneur déterminée en particules solides fines telles que du graphite ou du plomb. L'élimination avant revissage de ces particules déposées est possible mais représente une opération supplémentaire à mettre en oeuvre. On préfère donc le plus souvent utiliser un jeu aussi faible que possible, sur une partie au moins de la longueur axiale, du filetage par exemple sur au moins le tiers de la longueur axiale totale du filetage, ce jeu pouvant avoir une valeur "d2" comprise entre environ : 0,03 et 0,09 mm sur le flanc d'engagement, le jeu sur le flanc actif étant considéré comme nul. L'utilisation d'une huile ou graisse de viscosité adaptée permet alors de contrôler l'étanchéité en liaison avec la largeur "d2".

On utilise avantageusement des traitements de surface préalables, tels que la phosphatation au Zn ou Mn dans le cas d'un manchon en acier au carbone ou peu allié qui abaisse le coefficient de frottement d'un acier, en association avec une huile de viscosité adaptée.

Il suffit le plus souvent de faire le traitement de surface sur le seul manchon.

Au lieu d'une phosphatation on peut utiliser un dépôt métallique de faible épaisseur, tel que par exemple un dépôt électrolytique de Cu, Cr, Ni, Sn, Pb ou autres. Ces dépôts peuvent être réalisés sur une large gamme d'aciers non alliés ou alliés, inoxydables ou réfractaires et aussi sur d'autres métaux ou alliages. D'autres méthodes de dépôt peuvent aussi être mises en oeuvre de façon connue pour réduire le coefficient de frottement et empêcher le grippage.

Ainsi, grâce à la géométrie et aux dimensions des dents du filetage mâle par rapport à la géométrie et aux dimensions des dents du filetage femelle en combinaison avec le système d'épaulement d'arrêt qui a été décrit, on contrôle parfaitement l'interférence à l'état assemblé entre logement femelle et élément mâle, les deux extrémités de l'assemblage étant traitées et montées comme si elles étaient indépendantes.

Il en résulte un assemblage qui, malgré l'absence de portée d'étanchéité métal-métal séparée du filetage, assure un degré d'étanchéité excellent aux liquides tels que eau ou pétrole dans les conditions d'exploitation sévères recherchées dans l'industrie pétrolière, conditions d'exploitation qui ne permettent pas d'utiliser les assemblages filetés standards.

L'assemblage selon la présente invention a de plus l'avantage d'être économique du fait de l'absence de surépaisseur du manchon pour réaliser un talon de butée des éléments mâles et d'un montage facile sur chantier du fait notamment de la conception et des jeux du passage axial réalisé dans le manchon.

Un tel assemblage bien qu'il puisse être utilisé pour une large gamme dimmensionelle, est particulièrement intéressant pour assembler des tubes de fort diamètre, par exemple des tubes de cuvelage de puits pétroliers, par exemple dans des diamètres extérieurs de l'ordre de 127 mm (5") à 508 mm (20"), cet exemple d'utilisation et ces dimensions n'étant nullement limitatifs.

La présente invention peut faire l'objet de nombreuses variantes de réalisation qui font partie du domaine revendiqué.

## Revendications

1. Assemblage fileté pour tubes comportant un manchon (2) muni de deux logements femelles (3, 4) à filetages tronconiques intérieurs (5, 6) dans chacun desquels est vissé un élément mâle (9, 10) d'un tube muni d'un filetage tronconique extérieur (7, 8) correspondant, chaque élément mâle comportant une zone d'extrémité non filetée (11, 12) qui est engagée à l'intérieur d'un passage annulaire axial (17) du manchon (2), la zone d'extrémité comprenant une paroi frontale (13, 14), les parois frontales des deux éléments mâles (9, 10) venant en butée l'une contre l'autre en fin de vissage, au moins une paire d'épaulements d'arrêt mâle et femelle disposée sur logement femelle et élément mâle correspondants (18, 18-1, 19, 19-1 ) permettant un positionnement axial précis de chacun des éléments mâle (9, 10) dans son logement femelle. (3, 4) et des parois frontales (13, 14) en butée, les zones d'extrémité non filetées (11, 12) coulissant avec jeu à l'intérieur du passage annulaire axial (17) et à l'état vissé les surfaces extérieures (15, 16) des zones d'extrémité des éléments mâles n'étant pas en contact d'appui continu avec la surface intérieure du passage annulaire (17) et les dents des filets mâles sur une longueur axiale représentant une partie de la longueur totale de la zone filetée ayant une hauteur constante identique à la hauteur des dents des filets femelles, une interférence existant entre filetage mâle et filetage femelle.

2. Assemblage fileté suivant la revendication 1 caractérisé en ce qu'il est muni de deux paires d'épaulements d'arrêt mâle et femelle disposés sur les deux logements et les éléments mâles correspondants.

3. Assemblage fileté suivant la revendication 2 caractérisé en ce que chaque épaulement d'arrêt mâle (18, 19) est situé entre l'extrémité de petit diamètre de la zone filetée mâle et le début de la zone d'extrémité non filetée (11, 12), chaque épaulement d'arrêt femelle (18-1, 19-1) étant situé entre l'extrémité de petit diamètre de la zone filetée femelle et le début du passage axial du manchon.

4. Assemblage fileté suivant l'une des revendications 2 ou 3 caractérisé en ce que l'écartement des surfaces d'appui (18, 19) des épaulements mâles est supérieur, lorsque les parois frontales (13, 14) sont en butée, à celui des surfaces d'appui (18-1, 19-1) des épaulements femelles.

5. Assemblage fileté suivant l'une des revendications 1 à 4 caractérisé en ce que la longueur axiale sur laquelle les dents des filets mâles ont une hauteur constante identique à la hauteur des dents des filets femelles est d'au moins un quart de la longueur totale de la zone filetée.

6. Assemblage fileté suivant l'une des revendications 1 à 5 caractérisé en ce que les dents des filets mâles ont une hauteur constante identique à la hauteur des dents des filets femelles sur la totalité de la longueur de la zone filetée dans laquelle les dents ont leur pleine hauteur.

7. Assemblage fileté suivant l'une des revendications 1 à 6 caractérisé en ce que le flanc actif des dents du filet mâle et celui du filet femelle a un angle négatif.

8. Assemblage fileté suivant l'une des revendications 1 à 7 caractérisé en ce que le flanc d'engagement des dents du filet mâle a une pente plus forte en valeur absolue que la pente du flanc actif.

9. Assemblage fileté suivant l'une des revendications 1 à 8 caractérisé en ce que le flanc d'engagement a dans sa partie supérieure une inclinaison de 30 à 70°.

10. Assemblage fileté suivant l'une des revendications 1 à 9 caractérisé en ce que le jeu résiduel (d2) au niveau du flanc d'engagement (30, 31) des dents du filet mâle est de l'ordre de 0,03 à 0,09 mm.

11. Assemblage fileté suivant l'une des revendications 1 à 10 caractérisé en ce que le jeu existant entre les sommets et fonds de dents est de l'ordre de 0 à 0,05 mm.

12. Assemblage fileté suivant l'une des revendications 1 à 10 caractérisé en ce que les sommets (21, 27) et les fonds (23, 26) des dents des filets mâles et femelles son parallèles à la pente (X3-X3) du filetage.

13. Assemblage fileté suivant l'une des revendications 1 à 12 caractérisé en ce que l'état de surface du manchon est modifié par un traitement abaissant son coefficient de frottement et évitant le grippage.

14. Assemblage fileté suivant l'une des revendications 1 à 12 caractérisé en ce que les parois frontales ont une surface annulaire en majeure partie plane qui se trouve dans un plan perpendiculaire à l'axe du manchon.

15. Procédé de réalisation d'un assemblage fileté suivant l'une des revendications 1 à 14 caractérisé en ce qu'on effectue un premier assemblage du manchon (2) avec un premier élément fileté mâle (10) avec vissage et serrage jusqu'à mise en butée l'une contre l'autre des surfaces d'appui (19, 19-1) de la première paire d'épaulements correspondants, puis en ce qu'on effectue le vissage du deuxième élément mâle (9) jusqu'à venue en butée des parois frontales (13, 14) de ces deux éléments mâles, en conservant un jeu entre les surfaces d'appui de la deuxième paire d'épaulements (18, 18-1).

## Patentansprüche

1. Gewindeverbindung für Rohre mit einer Muffe (2) mit zwei Aufnahmesitzen (3, 4) mit kegelstumpfförmigen Innengewinden (5, 6), in jeden von denen ein komplementäres Einführelement (9, 10) eines Rohrs mit einem entsprechenden kegelstumpfförmigen Außengewinde (7, 8) eingeschraubt ist, wobei jedes Einführelement eine gewindelose Endzone (11, 12) aufweist, die ins Innere eines axialen, ringförmigen Durchgangs (17) der Muffe (2) eingeführt ist, wobei die Endzone eine Stirnwand (13, 14) aufweist, wobei die Stirnwände der beiden Einführelemente (9, 10) am Ende des Schraubvorgangs gegeneinander in Anschlag gelangen, wobei mindestens ein Paar von Einführ- und Aufnahme-Anschlagschultern (18, 18-1, 19, 19-1), die auf entsprechenden Aufnahmesitzen und Einführelementen angeordnet sind, eine präzise axiale Positionierung jedes der Einführelemente (9, 10) in seinem Aufnahmesitz (3, 4) und der Stirnwände (13, 14) in Anschlag ermöglichen, wobei die gewindelosen Endzonen (11, 12) mit Spiel im Inneren des axialen ringförmigen Durchgangs (17) gleiten und im geschraubten Zustand die Außenflächen (15, 16) der Endzonen der Einführelemente nicht in kontinuierlichem Auflagekontakt mit der Innenfläche des ringförmigen Durchgangs (17) stehen, und wobei die Zähne der Einführ-Gewindegänge über eine axiale Länge, die einen Teil der Gesamtlänge der Gewindezone darstellt, eine konstante Höhe aufweisen, die gleich der Höhe der Zähne der Aufnahme-Gewindegänge ist, wobei zwischen dem Einführgewinde und dem Aufnahmegewinde eine Interferenz besteht.

2. Gewindeverbindung nach Anspruch 1, dadurch gekennzeichnet, daß sie mit zwei Einführ und Aufnahme-Anschlagschultern versehen ist, die auf den zwei Aufnahmesitzen und den entsprechenden Einführelementen angeordnet sind.

3. Gewindeverbindung nach Anspruch 2, dadurch gekennzeichnet, daß jede Einführ-Anschlagschulter (18, 19) sich zwischen dem Ende der Einführ-Gewindezone mit kleinem Durchmesser und dem Anfang der gewindelosen Endzone (11, 12) befindet, während jede Aufnahme-Anschlagschulter (18-1, 19-1) sich zwischen dem Ende der Aufnahme-Gewindezone mit kleinem Durchmesser und dem Anfang des axialen Durchgangs der Muffe befindet.

4. Gewindeverbindung nach einem der Ansprüche 2 oder 3, dadurch gekennzeichnet, daß der Abstand der Auflageflächen (18, 19) der Einführschultern, wenn die Stirnwände (13, 14) sich in Anschlag befinden, größer ist als derjenige der Auflageflächen (18-1, 19-1) der Aufnahmeschultern.

5. Gewindeverbindung nach einem der Ansprüche 1 bis 4, dadurch gekennzeichnet, daß die axiale Länge, über die die Zähne der Einführ-Gewindegänge eine konstante Höhe gleich der Höhe der Zähne der Aufnahme-Gewindegänge haben, mindestens ein Viertel der Gesamtlänge der Gewindezone beträgt.

6. Gewindeverbindung nach einem der Ansprüche 1 bis 5, dadurch gekennzeichnet, daß die Zähne der Einführ-Gewindegänge über die gesamte Länge der Gewindezone, in der die Zähne ihre vollständige Höhe haben, eine konstante Höhe gleich der Höhe der Aufnahme-Gewindegänge aufweisen.

7. Gewindeverbindung nach einem der Ansprüche 1 bis 6, dadurch gekennzeichnet, daß die aktive Flanke der Zähne des Einführ-Schraubengangs und die des Aufnahme-Schraubengangs einen negativen Winkel haben.

8. Gewindeverbindung nach einem der Ansprüche 1 bis 7, dadurch gekennzeichnet, daß die Eingriffsflanke der Zähne des Einführ-Schraubengangs im Absolutwert eine stärkere Steigung hat als die aktive Flanke.

9. Gewindeverbindung nach einem der Ansprüche 1 bis 8, dadurch gekennzeichnet, daß die Eingriffsflanke in ihrem oberen Bereich eine Neigung von 30 bis 70° aufweist.

10. Gewindeverbindung nach einem der Ansprüche 1 bis 9, dadurch gekennzeichnet, daß das Restspiel (d2) in der Eingriffsflanke (30, 31) der Zähne des Einführ-Schraubengangs in der Größenordnung von 0,03 bis 0,09 mm liegt.

11. Gewindeverbindung nach einem der Ansprüche 1 bis 10, dadurch gekennzeichnet, daß das Spiel zwischen den Köpfen und den Füßen der Zähne zwischen 0 und 0,05 mm liegt.

12. Gewindeverbindung nach einem der Ansprüche 1 bis 10, dadurch gekennzeichnet, daß die Köpfe (21, 27) und die Füße (23, 26) der Zähne der Einführ- und Aufnahme-Gewindegänge parallel zur Steigung (X3-X3) des Gewindes liegen.

13. Gewindeverbindung nach einem der Ansprüche 1 bis 12, dadurch gekennzeichnet, daß der Oberflächenzustand der Muffe durch eine Behandlung verändert wird, die seinen Reibungskoeffizienten herabsetzt und das Festfressen vermeidet.

14. Gewindeverbindung nach einem der Ansprüche 1 bis 12, dadurch gekennzeichnet, daß die Stirnwände eine zum größten Teil ebene ringförmige Oberfläche haben, die sich in einer Ebene senkrecht zur Achse der Muffe befindet.

15. Herstellungsverfahren für eine Gewindeverbindung nach einem der Ansprüche 1 bis 14 , dadurch gekennzeichnet, daß eine erste Verbindung der Muffe (2) mit einem ersten Einführ-Gewindeelement (10) mit Verschraubung und Anziehen bis zum Anliegen der Auflageflächen (19, 19-1) des ersten Paars von entsprechenden Schultern aneinander durchgeführt wird, daß dann das Verschrauben des zweiten Einführelements (9) bis zum Anliegen der Stirnwände (13, 14) dieser beiden Einführelemente aneinander durchgeführt wird, wobei ein Spiel zwischen den Auflageflächen des zweiten Paars von Schultern (18, 18-1) beibehalten wird.

## Claims

1. Thread joint for tubes comprising a sleeve (2) provided with two female housings (3, 4) with internal tapered threads (5, 6) in each of which is screwed a male element (9, 10) of a tube provided with a corresponding external tapered thread (7, 8) each male element comprising a non-threaded extremity zone (11, 12) which engages into an annular axial passage (17) of the sleeve (2), the extremity zone comprising a front wall (13, 14), the front walls of the two male elements (9, 10) abutting one against the other when screwing is completed, at least one pair of male and female stop shoulders disposed on the female housing and corresponding male element (18, 18-1, 19, 19-1)allowing precise axial positioning of each of the male elements (9, 10) in its female housing (3, 4) and of the abutting front walls (13, 14), the non-threaded extremity zones (11, 12) sliding with clearance into the inside of the annular axial passage (17), and once screwed the external surfaces (15, 16) of the extremity zones of the male elements not being in continuous bearing contact with the internal surface of the annular passage (17), and the teeth of the male threads over an axial length representing a part of the total length of the threaded zone having a constant height identical to the height of the female thread teeth, interference existing between male thread and female thread.

2. Threaded joint according to claim 1, characterised in that it is provided with two pairs of male and female stop shoulders disposed on the two housings and the corresponding male elements.

3. Threaded joint according to claim 2, characterised in that each male stop shoulder, (18, 19) is located between the small diameter extremity of the male threaded zone and the beginning of the non-threaded extremity zone (11, 12), each female stop shoulder (18-1, 19-1) being located between the small diameter extremity of the female threaded zone and the start of the axial passage of the sleeve.

4. Threaded joint according to one of claims 2 or 3, characterised in that the distance apart of the bearing surfaces (18, 19) of the male shoulders is greater when the front walls (13, 14) are abutting, than that of the bearing surfaces (18-1, 19-1) of the female shoulders.

5. Threaded joint according to one of claims 1 to 4, characterised in that the axial length over which the male thread teeth have a constant height identical to the height of the teeth of the female threads is at least equal to a quarter of the total length of the threaded zone.

6. Threaded joint according to one of claims 1 to 5, characterised in that the male thread teeth have a constant height identical to the height of the teeth of the female threads over the whole of the length of the threaded zone in which the teeth have their full height.

7. Threaded joint according to one of claims 1 to 6, characterised in that the active flank of the teeth of the male thread and the female thread is at a negative angle.

8. Threaded joint according to one of claims 1 to 7, characterised in that the engaging flank of the teeth of the male thread has a greater incline in absolute value than the incline of the active flank.

9. Threaded joint according to one of claims 1 to 8, characterised in that the upper part of the engaging flank has an inclination of 30 to 70°.

10. Threaded joint according to one of claims 1 to 9, characterised in that the residual clearance (d2) at the level of the engaging flank (30, 31) of the teeth of the male thread is of approximately 0.03 to 0.09 mm.

11. Threaded joint according to one of claims 1 to 10, characterised in that the clearance existing between the crests and roots of the teeth is of approximately 0 to 0.05 mm.

12. Threaded joint according to one of claims 1 to 10, characterised in that the crests (21, 27) and the roots (23, 26) of the teeth of the male and female threads are parallel to the incline (X3-X3) of the thread.

13. Threaded joint according to one of claims 1 to 12, characterised in that the state of the surface of the sleeve is modified by a treatment reducing its friction coefficient and preventing seizing.

14. Threaded joint according to one of claims 1 to 12, characterised in that the front walls have an annular surface largely plane and which is in a plane perpendicular to the axis of the sleeve.

15. Process for production of a threaded joint according to one of claims 1 to 14, characterised in that initial joining of the sleeve (2) with a first male threaded element (10) is carried out, with screwing and tightening until abutment one against the other of the bearing surfaces (19, 19-1) of the first pair of corresponding shoulders, then in that the screwing of the second male element (9) until abutment of the front walls (13, 14) of these two male elements is carried out, while retaining a clearance between the bearing surfaces of the second pair of shoulders (18, 18-1).
